(19) **Europäisches Patentamt / European Patent Office / Office européen des brevets**

(11) **EP 1 675 294 B1**

(12) **EUROPEAN PATENT SPECIFICATION**

(45) Date of publication and mention
of the grant of the patent:
**23.07.2008 Bulletin 2008/30**

(51) Int Cl.:
*H04L 1/00* $^{(2006.01)}$    *H04B 7/005* $^{(2006.01)}$

(21) Application number: **05254879.9**

(22) Date of filing: **04.08.2005**

(54) **CQI decoding**

Dekodierung eines CQI

Décodage d'un CQI

(84) Designated Contracting States:
**DE FR GB IT**

(30) Priority: **24.12.2004 JP 2004374316**
     **26.04.2005 JP 2005128702**

(43) Date of publication of application:
**28.06.2006 Bulletin 2006/26**

(73) Proprietor: **FUJITSU LIMITED**
**Kawasaki-shi,**
**Kanagawa 211-8588 (JP)**

(72) Inventors:
 • **Futami, Tetsuhiro,**
 **c/o Fujitsu Limited**
 **Kawasaki-shi,**
 **Kanagawa 211-8588 (JP)**

 • **Kimura, Dai,**
 **c/o Fujitsu Limited**
 **Kawasaki-shi,**
 **Kanagawa 211-8588 (JP)**

(74) Representative: **Fenlon, Christine Lesley**
**Haseltine Lake**
**Lincoln House**
**300 High Holborn**
**London WC1V 7JH (GB)**

(56) References cited:
**EP-A- 1 248 403      EP-A- 1 478 114**
**US-A1- 2004 057 394      US-A1- 2004 110 473**

**Description**

BACKGROUND OF THE INVENTION

1. Field of the Invention

The present invention generally relates to a correlating decoding method using a maximum likelihood (ML) detection algorithm, and more particularly, to an error correction decoding technique for improving decoding characteristics, as well as to a communication apparatus and a digital transmission system using the error correction decoding technique.

2. Description of the Related Art

W-CDMA (Wideband Code Division Multiple Access) systems, which systems are standardized as the third-generation mobile communications systems, employ a Reed-Muller code for encoding a transport format combination indicator (TFCI) or a channel quality indicator (CQI). See 3GPP TS (3rd Generation Partnership Project Technical Specification) 25.212.

The transport format combination indicator (TFCI) is used to report a combination of transport channels multiplexed on layer 1, such that a communication node that receives data can correctly separate and decode the data of each of the transport channels.

The channel quality indicator (CQI) is used to feed the downlink transmission quality measured by a mobile terminal back to a base station, the downlink employing high speed downlink packet access (HSDPA) which is the extended standard of the W-CDMA downlink transmission. The base station controls the coding rate and the modulation scheme of the HS-PDSCH (high speed physical downlink shared channel) in an adaptive manner, according to the downlink channel quality.

The Reed-Muller code is an extended orthogonal code, and can be decoded based on correlating decoding or soft-decision majority decoding. Correlating decoding is a decoding method using a maximum likelihood decision for selecting a code word that has the maximum correlation value with respect to the received sequence among all possible code words that can be transmitted, and is superior in decoding characteristic to simpler soft-decision majority decoding.

The information bit sizes of the CQI and TFCI are 5 bits (32 code words) and 10 bits (1024 code words), respectively, and accordingly, the computational scale is at a realistic level. In addition, because the transmitted information is an essential parameter affecting the system performance, it is preferred to use a correlating decoding method having superior decoding characteristics.

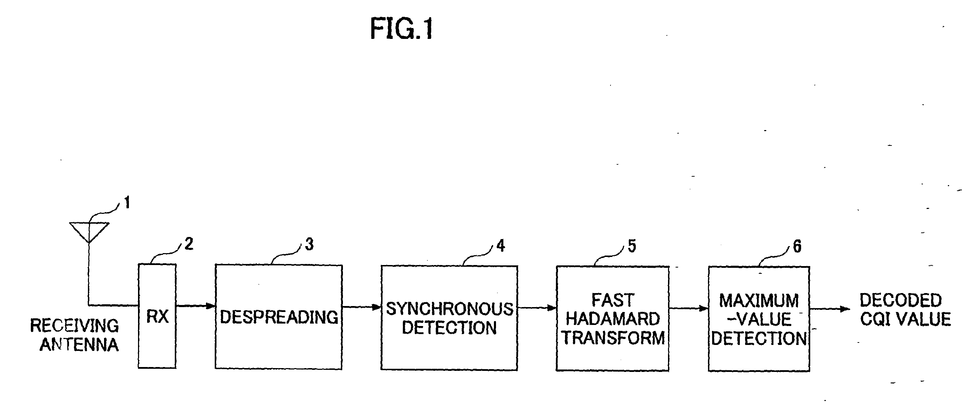

A conventional structure of the receiving end of a W-CDMA base station that performs CQI decoding is shown in FIG. 1.

An RF signal received at the receiving antenna 1 is input to the RX unit (or baseband processing unit) 2, and converted into a baseband signal through frequency conversion. Despreading unit 3 performs despreading on the baseband signal for each user to separate the contained physical channels, such as dedicated physical control channel (DPCCH), high speed dedicated physical control channel (HS-DPCCH) for HS-DSCH, and dedicated physical data channel (DPDCH), from the user-based code-multiplexed signal. The despread symbols of each physical channel are supplied to the synchronous detection unit 4, in which phase rotation generated on the channel is corrected by channel estimation using a pilot signal mapped on the DPCCH. Since the CQI is mapped on the HS-DPCCH, a decoding operation is carried out using the synchronous detection result for the HS-DPCCH.

The HS-DPCCH synchronous-detected symbol is input to the fast Hadamard transform (FHT) unit 5 to take correlation with each of the 32 code words. The maximum value detection unit 6 determines a correlation value with the maximum absolute value among the 32 correlation values, and outputs the information bits corresponding to the code word of the maximum correlation as a decoded CQI value.

TFCI can also be decoded in a similar manner because the only difference from CQI is that TFCI is mapped on a DPCCH.

Channel estimation for a received signal is disclosed in, for example, JP 2003-115783A.

Because CQI and TFCI used in a W-CDMA system are decoded using a correlation decoding method, which is a kind of maximum likelihood decoding technique, a certain level of coding gain can be obtained. However, CQI and TFCI propagate important parameters directed to the essential part of the system performance, and the influence on the system due to decoding error is quite large, as described above. Accordingly, in order to guarantee a required decoding quality, a certain type of power distribution to CQI and TFCI has to be performed through gain factor control by an upper layer. For example, when the decoding quality is low, the power level allocated to CQI or TFCI has to be increased. This may lead to increase of interference level at other nodes and increase of power consumption of the focused node (especially, a waste of battery energy in a mobile phone). Accordingly, it is an important issue to make further improvement for increasing the system capacity and reducing transmit power levels.

Although JP 2003-115783A discloses improvement of the decoding characteristic (or estimation accuracy), this publication is not directed to improvement of the decoding characteristic of control information itself. This publication is based on the assumption that high decoding accuracy is already guaranteed by adding a redundancy bit to the control information. After the control information with the redundancy bit is decoded correctly, the decoded information is encoded again so as to be used as a known symbol similar to a pilot symbol.

EP-A-1478114 discloses an error correction decoding method employing a correlation decoding technique, which method includes the steps of estimating decoding reliability of a decoding result using one or more correlation values acquired during the correlating operation, and correcting the decoding result according to the decoding reliability.

SUMMARY OF THE INVENTION

The present invention was conceived in view of the above-described problems in the prior art, and it is an object to provide an error correction decoding method, a communication apparatus, and a digital transmission system that can allow further improvement of the correlating decoding characteristic.

According to a first aspect of the present invention, there is provided an error correction decoding method using a correlating decoding technique for decoding a channel quality indicator used in a W-CDMA system, comprising the steps of: estimating a decoding reliability K of a decoding result using one or more correlation values acquired in a correlating process; and correcting the decoding result according to the decoding reliability; characterised in that an estimated value for the decoding reliability K is found using the relationship:

$$K = \frac{\Delta_{CQI}}{N}(x_1 - x_2)$$

where $\Delta_{CQI}$ is the transmission amplitude ratio of the channel quality indicator to a dedicated physical control channel of said W-CDMA system, N is the average noise level, and $x_1$ and $x_2$ are the greatest and second greatest correlation values respectively.

Since the decoding result is likely to be incorrect when the decoding reliability is low, correcting the decoding result according to the degree of decoding reliability is effective to reduce adverse influence on the system due to decoding error.

The decoding reliability may be compared with a prescribed threshold to determine whether the decoding result is valid (or invalid). For example, if the decoding reliability is at or above the threshold, the decoding result is valid, otherwise, it is determined as being invalid. If the decoding result is invalid, the most recent effective decoding result may be used in place of the invalid decoding result.

Preferably, the determination threshold is set to the optimum value so as to allow accurate determination for invalid decoding results when decoding error occurs. By not using the current decoding result that is likely to be incorrect, error operations or adverse influence on the system due to the incorrect decoded values can be reduced. Especially, when the change in time of the signal to be decoded is small, replacing the current decoded value by the previous effective decoding value is effective in improving the decoding accuracy.

When the decoding result is determined as being invalid, an average of the past effective decoding results may be output, in place of the current decoding result. Alternatively, an extrapolation value of the past effective decoding results may be output, in place of the current invalid decoding result. By making use of the time-series information set of past effective decoding results to estimate the current decoding result based on the average or the extrapolation, the system operation can be controlled using more appropriate parameters estimated by taking into account the change in time.

According to a second aspect of the present invention there is provided a communication apparatus that uses a correlating decoding technique to decode a channel quality indicator used in a W-CDMA system, comprising: a decoding reliability estimator configured to estimate a decoding reliability K of a decoding result using one or more correlation values acquired in a correlating process; and a correcting unit configured to correct the decoding result according to the decoding reliability; characterised in that the decoding reliability estimator is operable to find the estimated value for the decoding reliability K using the relationship:

$$K = \frac{\Delta_{CQI}}{N}(x_1 - x_2)$$

where $\Delta_{CQI}$ is the transmission amplitude ratio of the channel quality indicator to a dedicated physical control channel of said W-CDMA system, N is the average noise level, and $x_1$ and $x_2$ are the greatest and second greatest correlation values respectively.

According to a third aspect of the present invention there is provided a communication apparatus comprising: a receiving unit configured to receive a decoding reliability from a second communication apparatus, which is in communication with the communication apparatus when the apparatus is in use, the second communication apparatus being apparatus according to the second aspect of the present invention; and a control unit configured to dynamically control a transmission parameter for an information item to be decoded such that the decoding reliability satisfies a required quality.

According to a fourth aspect of the present invention there is provided a digital transmission system including a first communication apparatus and a second communication apparatus connected so as to communicate with each other, wherein the first communication apparatus comprises apparatus according to the second aspect of the present invention, the transmitting means being configured to transmit the decoding reliability to the second communication apparatus; and wherein the second communication apparatus comprises apparatus according to the third aspect of the present invention.

In a digital transmission system in which one or more information items decodable by the above-described error correction decoding method are transmitted, the decoding reliability may be transmitted to the node being in communication with the focused communication apparatus. In this case, the counterpart node may control the transmission parameters, such as a coding rate or a transmit power level, in a dynamic manner such that the decoding reliability satisfies a prescribed quality. According to the change in channel communication quality, the minimum coding rate or transmit power level required to achieve a desired decoding reliability can be selected appropriately, and efficient data transmission and reduction of power consumption can be realized. Redundant interference affecting the surroundings can also be reduced by optimizing the transmit power level.

Thus, by correcting the decoded values based on the decoding reliability in a correlating decoding method, error operations which may arise in the system if using low-reliability decoding results as they are can be prevented.

By feeding the decoding reliability back to the node being in communication with the focused-on communication apparatus, the coding rate or the transmit power of the counterpart node can be adaptively controlled according to the change in transmission quality. Consequently, efficient information transmission, reduction of power consumption, and reduction of interference level affecting the surroundings can be realized.

BRIEF DESCRIPTION OF THE DRAWINGS

Other objects, features, and advantages of the present invention will become more apparent from the following detailed description when read in conjunction with the accompanying drawings, in which:

FIG. 1 is a block diagram illustrating a conventional CQI decoding technique;
FIG. 2 is a block diagram illustrating a CQI decoding technique according to the first embodiment of the invention;
FIG. 3 is a diagram illustrating an example of fast Hadamard transform;
FIG. 4 is a block diagram illustrating a CQI decoding technique according to the second embodiment of the invention;
FIG. 5 is a graph showing an operation of the decoding result correcting unit (correction method 1) in the second embodiment;
FIG. 6 is a graph showing another example of the operation of the decoding result correcting unit (correction method 2) in the second embodiment;
FIG. 7 is a graph showing still another example of the operation of the decoding result correcting unit (correction method 3);
FIG. 8 is a flowchart of the operations (correction method 2) carried out by decoding result correcting unit according to the second embodiment of the invention;
FIG. 9 is a block diagram illustrating an example of a digital transmission system; and
FIG. 10 is a block diagram illustrating another example of a digital transmission system.

DETAILED DESCRIPTION OF THE PREFERED EMBODIMENTS

The preferred embodiments of the present invention are now described with reference to the attached drawings.

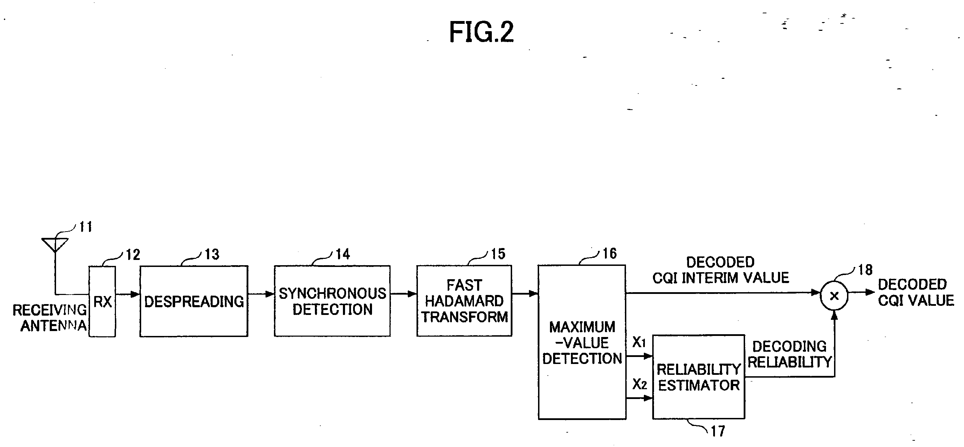

FIG. 2 is a schematic block diagram illustrating a CQI decoding technique according to the first embodiment of the present invention.

A radio signal received at a receiving antenna 11 is converted to a baseband signal through frequency conversion at an RX unit 12. A despreading unit 13 performs despreading for each user to separate the user signal into physical channels DPCCH, HS-DPCCH, and DPDCH which have been code-multiplexed for each user. The despread symbol of each of the separated physical channels is supplied to the synchronous detector 14, in which phase rotation having occurred in the channel is corrected by channel estimation using the pilot signal mapped on the DPCCH. Since CQI is mapped on the HS-DPCCH, CQI is to be decoded using the synchronous decoding result of the HS-DPCCH. The HS-DPCCH synchronous-detected symbol is input to a fast Hadamard transform (FHT) unit 15, and subjected to correlation with 32 code words.

In general, the Hadamard transform is expressed as

$$\overset{\rho}{y} = H_n \overset{\rho}{x} \tag{1}$$

where Hn denotes the nth degree Hadamard matrix, and vectors x and y are expressed as

$$\overset{\rho}{x} = \begin{pmatrix} x_1 \\ x_2 \\ M \\ x_n \end{pmatrix}, \quad \overset{\rho}{y} = \begin{pmatrix} y_1 \\ y_2 \\ M \\ y_n \end{pmatrix} \tag{2}$$

respectively.

This corresponds to an operation of obtaining n correlation values $y_1$ through $y_n$ by correlation between input sequences $x_1$ through $x_n$ and the Hadamard matrix Hn, which operation is generally used in a correlating decoding process. Breaking the nth degree Hadamard transform down to the second-degree Hadamard transform to simplify the arithmetic operation is widely known as fast Hadamard transform (FHT) .

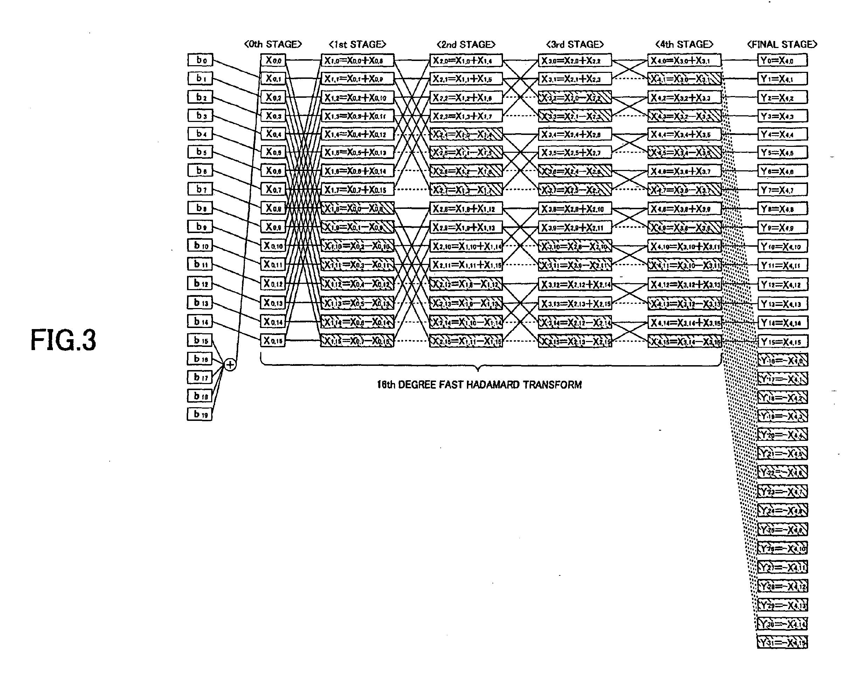

FIG. 3 is an example of fast Hadamard transform performed by the FHT unit 15. Based on the 20-symbol CQI (with symbols $b_0$-$b_{19}$) supplied from the synchronous detector 14, sixteen sequences $x_{0,0}$ through $x_{0,15}$ are acquired.

$$x_{0,0} = b_{15}+b_{16}+b_{17}+b_{18}+b_{19}$$

$$x_{0,k} = b_{k+1} \quad (k=1-15).$$

Then, sixteen correlation values $X_{4,0}$ through $X_{4,15}$ are obtained by 16th degree fast Hadamard transform. In other words, the operation expressed by Equation (3) is performed.

$$\begin{pmatrix} X_{4,0} \\ X_{4,1} \\ M \\ X_{4,15} \end{pmatrix} = H_{16} \begin{pmatrix} X_{0,0} \\ X_{0,1} \\ M \\ X_{0,15} \end{pmatrix} \tag{3}$$

The sign-inverted 16 correlation values are obtained from the sixteen correlation values, and thus, a total of thirty two (32) correlation values $y_0$-$y_{31}$ are obtained.

$$y_k = X_{4,k} \quad (k=0-15)$$

$$y_k = -X_{4,k-1} \quad (k=16-31)$$

Then, the 32 correlation values $y_0$-$y_{31}$ output from the FHT unit 15 are supplied to the maximum value detection unit 16 to detect the maximum correlation value

$$\max_{0 \le k \le 31} y_k \qquad (4)$$

and the index "m" of the correlation value $y_m$ expressed as

$$y_m = \max_{0 \le k \le 31} y_k \qquad (5)$$

is output as the CQI interim value.

In addition, the second greatest correlation value expressed as

$$y_n = \max_{0 \le k \le 31, k \ne m} y_k \qquad (6)$$

is detected by the maximum value detection unit 16. The maximum correlation value $y_m$ and the second greatest correlation value $y_n$ are output as $x_1$ and $x_2$, respectively, from the maximum value detection unit 16, as illustrated in FIG. 2.

The correlation values $x_1$ and $x_2$ are supplied to the reliability estimator 17, which estimates a decoding reliability K of the correlating decoding based on

$$K = \frac{\Delta_{CQI}}{N} \left( x_1 - x_2 \right) \qquad (7)$$

where $\Delta_{CQI}$ is the transmission amplitude ratio of CQI to DPCCH, and N denotes the average noise level. Because $\Delta_{CQI}$, is a parameter reported from an upper layer, this parameter is known at a base station. N is acquired by an ordinary noise-level measuring process.

Next, explanation is made below of estimation of decoding reliability.

If the channel estimation using a pilot signal on a DPCCH is ideal, the received CQI symbol having been subjected to synchronous detection is expressed as

$$\sqrt{S_{CQI}} \sqrt{S_{DPCCH}} \vec{d} + \sqrt{S_{DPCCH}} \vec{h} = S_{DPCCH} \Delta_{CQI} \vec{d} + \sqrt{S_{DPCCH}} \vec{h} \qquad (8)$$

where $S_{DPCCH}$ denotes the receipt power level of DPCCH, $S_{CQI}$ is the receipt power level of the CQI symbol, $\vec{d}$ denotes the transmitted symbol normalized to amplitude of $\pm 1$, and $\vec{h}$ denotes the Gaussian noise with an average power level N. $S_{DPCCH}$ and $S_{CQI}$ satisfy the following relation.

$$S_{CQI} = S_{DPCCH} \Delta^2_{CQI} \qquad (9)$$

A channel quality indicator (CQI) is generated as 20-symbol (20, 5) code based on the 16-symbol code word obtained from the Reed-Muller (16, 5) code and by repeating the 16th code symbol four times (to add four symbols).

As a result of the correlation between the received CQI symbol and the 20-symbol code word by fast Hadamard transform, the distribution of the correlation value with respect to a code word consistent with the transmitted CQI (that is, the correlation with respect to a correct CQI) becomes a Gaussian distribution with an average of twenty (20) $S_{DPCCH}$ $\Delta_{CQI}$ values and variance of twenty (20) $S_{DPCCH}{}^*N$ values. On the other hand, the distribution of the correlation value with respect to a code word inconsistent with the transmitted CQI (that is, the correlation value with respect to an incorrect CQI) becomes a Gaussian distribution with an average of four (4) $S_{DPCCH}\Delta_{CQI}$ values and variance of twenty (20) $S_{DPCCH}{}^*N$ values.

If $\mu_x = S_{DPCCH} \Delta_{CQI}$ and $\sigma^2 = 20{}^*S_{DPCCH}{}^*N$, then the distribution $P_A(x)$ of the correlation values with respect to the correct CQI and the distribution $P_B(x)$ of the correlation values with respect to the incorrect CQI are expressed as

$$P_A(x) = \frac{1}{\sqrt{2\pi\sigma^2}} \exp\left[-\frac{(x-20\mu_x)^2}{2\sigma^2}\right]$$

$$P_B(x) = \frac{1}{\sqrt{2\pi\sigma^2}} \exp\left[-\frac{(x-4\mu_x)^2}{2\sigma^2}\right] , \qquad (10)$$

respectively.

If the 32 correlation values are arranged in descending order, namely, $x_1, x_2, ..., x_{32}$ ($x_1 \geq x_2 \geq \cdots \geq x_{32}$), the probability An that the correlation value with respect to the correct CQI becomes nth greatest is expressed as

$$A_n = P_B(x_1) P_B(x_2) ... P_B(x_{n-1}) P_B(x_n) P_B(x_{n+1}) ... P_B(x_{32}) * 31! . \qquad (11)$$

Since the probability of obtaining a correct decoding result corresponds to the probability that the correlation value with respect to correct CQI becomes the maximum, this probability is described as $A_1$.

On the other hand, the probability that a wrong decoding result is produced corresponds to the probability that the correlation value with respect to the correct CQI becomes the kth greatest (k=2-32), and therefore, expressed as $A_2+A_3+...A_{32}$.

Accordingly, the decoding reliability C of the correlating decoding is defined as the ratio of the probability of acquiring the correct decoding result to the probability of acquiring a wrong decoding result, which is expressed as

$$C = A_1 / (A_2+A_3+...A_{32}) . \qquad (12)$$

Because the probability distribution is exponential, it can be regarded as

$$A_1 >> A_2 >> A_3 >> ... >> A_{32}$$

if the variance $\sigma^2$ is sufficiently small, and therefore, the decoding reliability can be approximated as

$$C \cong \frac{A_1}{A_2} . \qquad (13)$$

Taking the natural logarithm of C, it is expressed as

$$\ln C = \ln \frac{P_A(x_1)P_B(x_2)P_B(x_3)\Lambda\ P_B(x_{32})}{P_B(x_1)P_A(x_2)P_B(x_3)\Lambda\ P_B(x_{32})} = \ln \frac{P_A(x_1)P_B(x_2)}{P_B(x_1)P_A(x_2)} = \ln \frac{\exp\left[-\frac{(x_1-20\mu_x)^2}{2\sigma^2} - \frac{(x_2-4\mu_x)^2}{2\sigma^2}\right]}{\exp\left[-\frac{(x_1-4\mu_x)^2}{2\sigma^2} - \frac{(x_2-20\mu_x)^2}{2\sigma^2}\right]}$$

$$= -\left\{(x_2-20\mu_x)^2 + (x_2-4\mu_x)^2 - (x_1-4\mu_x)^2 - (x_2-20\mu_x)^2\right\}/2\sigma^2$$

$$= 16\frac{\mu_x}{\sigma^2}(x_1-x_2) = \frac{16S_{DPCCH}\Delta_{CQI}}{20S_{DPCCH}\,N}(x_1-x_2) \propto \frac{\Delta_{CQI}}{N}(x_1-x_2)$$

$$(14)$$

where the sign $\propto$ represents a proportional relation.

By subtracting the second greatest correlation value from the maximum correlation value, and by multiplying the subtraction result by $\Delta_{CQI}/N$, the decoding reliability can be determined.

The decoding reliability K can be modified to

$$K = \frac{\Delta_{CQI}}{N}(x_1-x_2) = \frac{x_1-x_2}{\sqrt{S_{CQI}S_{DPCCH}}}\frac{S_{CQI}}{N}\,.$$

$$(15)$$

Equation (15) can be interpreted as stating that the difference between the maximum correlation value and the second greatest correlation value is normalized to a dimensionless value and then multiplied by the receipt SNR (signal to noise ratio) of the CQI symbol.

As has been described, if approximation is employed on the assumption that the decoded SNR is sufficiently high, estimating the decoding reliability based on the difference between the maximum correlation value and the second greatest correlation value is logically the optimum method.

Qualitatively, the same effect can be achieved when estimating the decoding reliability based on the ratio of the maximum correlation value to the second greatest correlation value ($K \propto x_1/x_2$), and therefore, estimation based on the ratio is also included in the scope of the present invention.

Returning to FIG. 2, the decoding reliability estimated by the reliability estimator 17 is supplied as a weighting coefficient to the multiplier 18. The decoded CQI interim value output from the maximum value detector 16 is multiplied by the decoding reliability K, and the product

$$(\text{Decoded CQI value}) = K*(\text{CQI interim value})$$

is output as the final value of the decoded CQI.

In HSDPA systems, the greater the CQI value, the higher the downlink transmission quality is, and the coding rate and the modulation scheme can be adaptively controlled such that the transmission rate of the HS-PDSCH becomes higher. Accordingly, decoding error for CQI may cause the following influences. The distribution of decoding error in correlating decoding becomes random. If the decoding result turns up to be a much greater value than the actually transmitted CQI due to decoding error, an excessively high transmission rate is to be set with respect to the actual downlink transmission quality. In this case, the mobile terminal cannot decode the data correctly, which leads to retransmission of data. An excessive transmission rate and the accompanying data retransmission cause the downlink interference level to increase excessively, and as a result, the entire downlink system capacity is degraded. On the other hand, if the decoded CQI is smaller than the actually transmitted one due to decoding error, an excessively low transmission rate is to be set, as compared with the actual downlink transmission quality. In this case, the data are correctly decoded; however, the fundamentally expected throughput cannot be achieved.

In view of the influence on the entire system, decoding error producing a larger CQI is more serious than that yielding a smaller CQI value.

With the CQI decoding method of the first embodiment, a decoding result is corrected such that the decoded CQI value is weighted using a smaller weighting coefficient when the decoding reliability is low. This arrangement can reduce adverse influence on the system when decoding error results in a large CQI value.

Concerning TFCI, numerical multiplication (weighting) using decoding reliability makes no significant sense, unlike CQI, and therefore, the first embodiment may not be applied to TFCI decoding.

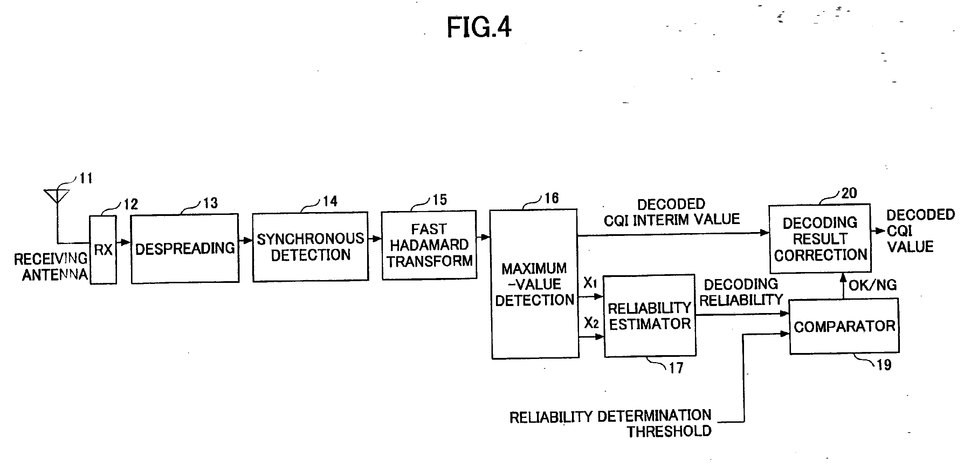

FIG. 4 is a schematic block diagram illustrating a CQI decoding technique according to the second embodiment of the invention. In the second embodiment, correction for a CQI decoding result is different from that in the first embodiment, and therefore, explanation is mainly made of the difference in the correcting method.

The decoding reliability K estimated by the reliability estimator 17 using the above-described method is input to a comparator 19, and compared with a prescribed threshold, which is a criterion of determination of the reliability. The comparator 19 determines that the decoding is valid (OK) when K is greater than or equal to the threshold (K≥ threshold), and outputs a determination of invalid (NG) when the reliability K is less than the threshold (K<threshold). The threshold used for the reliability determination is set to the optimum value in advance such that the decoding result is determined accurately as being invalid if decoding error has occurred.

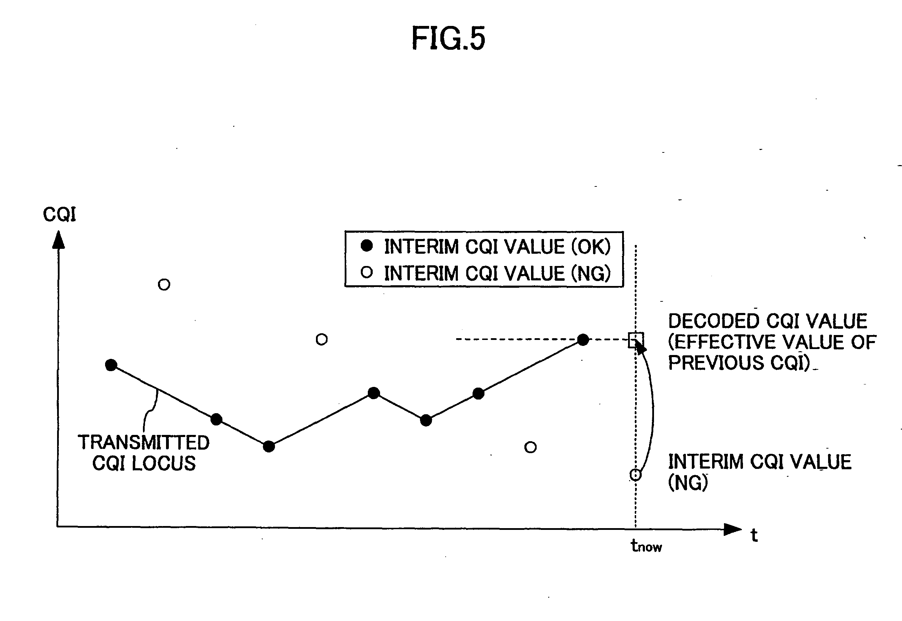

The output of the comparator 19 is connected to one input of a decoding result correction unit 20, which makes correction to the decoding result using one of the three methods illustrated in FIG. 5 through FIG. 7 to output a final value of decoded CQI. Examples of the decoding result correction are explained below.

(1) If the decoding result is proved to be valid, the current CQI interim value is output as a final CQI value. If the decoding result is determined as being invalid, the latest (the most recent) effective interim CQI value is output. In the example shown in FIG. 5, if the determination result at time $t_{now}$ indicates invalidity, the previous interim CQI value is output as a decoded CQI.

This correcting method may be slightly inferior in following capability to the change in time of CQI; however, the system performance is improved by replacing the invalid decoding result by the previous decoded value effectively produced with a certain degree of reliability, as compared with the case in which an improper CQI without correlation with change in time is employed.

This method is applicable to TFCI decoding.

(2) If the decoding result is valid, the current interim CQI value is output as it is. If the decoding result is invalid, an average of the past effective interim CQIs is output as the decoded CQI. The average is calculated by linear averaging using a forgetting coefficient $\alpha$ ($\alpha$=0-1), which is expressed as

$$CQI_{decoded}(t_n) = \alpha * CQI_{decoded}(t_{n-1}) + (1 - \alpha) * CQI_{interim}(t_{now})$$

$$(16)$$

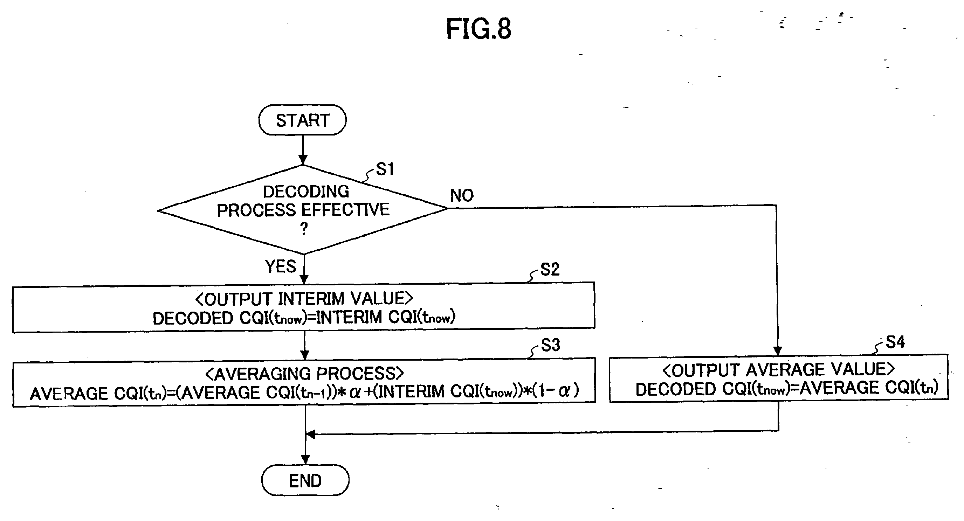

where $t_n$ is the receiving timing of the validly decoded nth CQI, and $t_{now}$ is the receiving timing of the current CQI. FIG. 8 is a flowchart of the correcting method (2). First, it is determined whether decoding is valid (S1). If decoding is valid (YES in S1), the current interim CQI value is output as it is (S2). Then, the above-described averaging operation is performed to update the average of the past effective interim CQI values (S3). If decoding is invalid (NO in S1), the updated average of the past effective CQI values is output as the decoded CQI (S4).

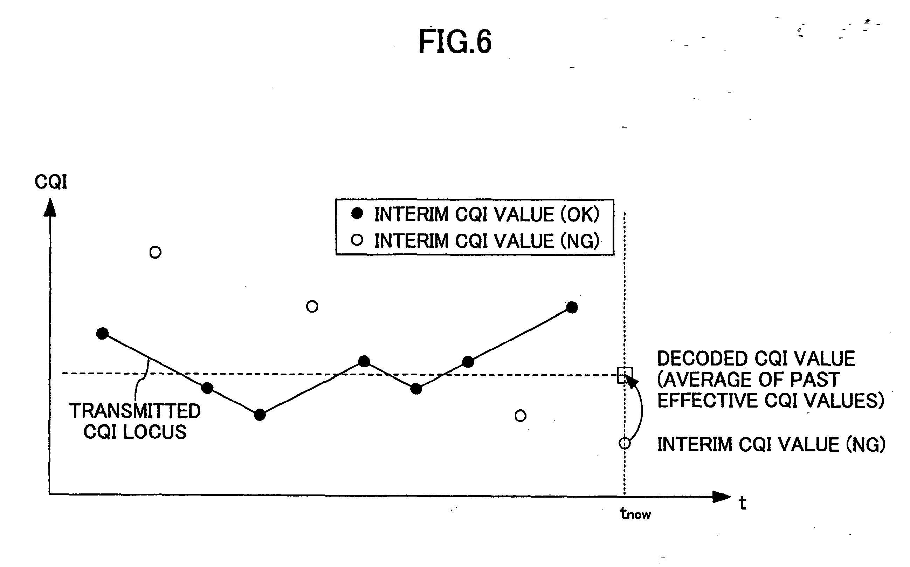

This correcting method is also illustrated in FIG. 6. If it is determined at time $t_{now}$ that decoding is invalid, the average of the past effective interim CQI values is output, in place of the invalid interim CQI value.

This method may be inferior in following capability to change in time of CQI; however, the system performance is improved by replacing the invalid decoding result by the average of past effective decoded values with certain degrees of reliability, as compared with the case in which an improper CQI without correlation with change in time is employed.

This method is not applied to TFCI decoding.

(3) If the decoding result is valid, the current interim CQI value is output as it is. If the decoding result is invalid, an extrapolation of the past effective interim CQI is output as the decoded CQI. An extrapolation is calculated by linear extrapolation defined by Equation (17), using the most recent two effective decoded values.

$$CQI_{decoded}(t_{now}) = CQI_{interim}(t_n)$$
$$+ (CQI_{interim}(t_{n-1}) - CQI_{interim}(t_{n-1})) * (t_{now} - t_n)$$
$$/ (t_n - t_{n-1}) \qquad (17)$$

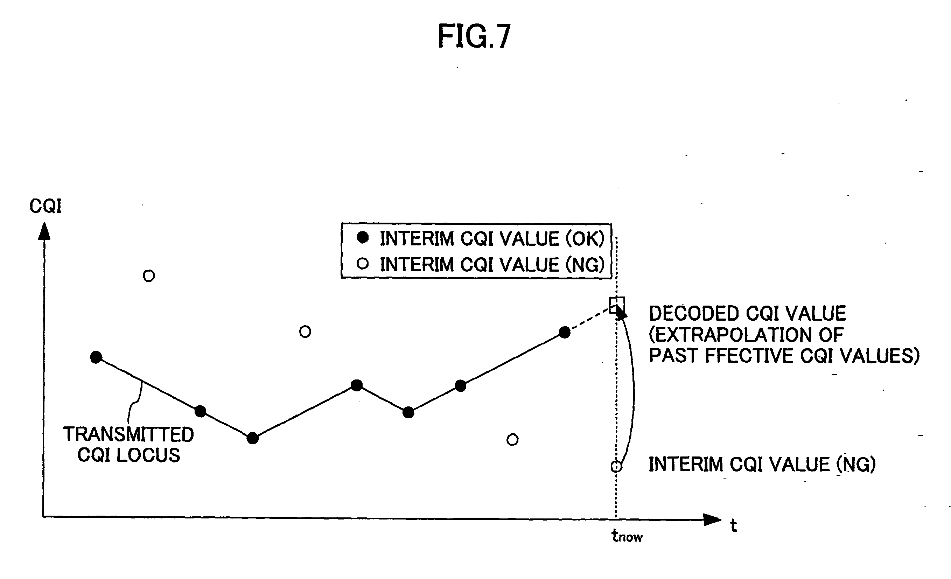

This method is illustrated in FIG. 7. When the decoding result is determined as being invalid, the slope (change in time) is extrapolated to estimate or replace the current decoded value. With this method, the system performance is improved, as compared with the case in which an improper CQI without correlation with change in time is employed. In addition, the following capability to change in time can be improved as compared with the above-described methods (1) and (2).

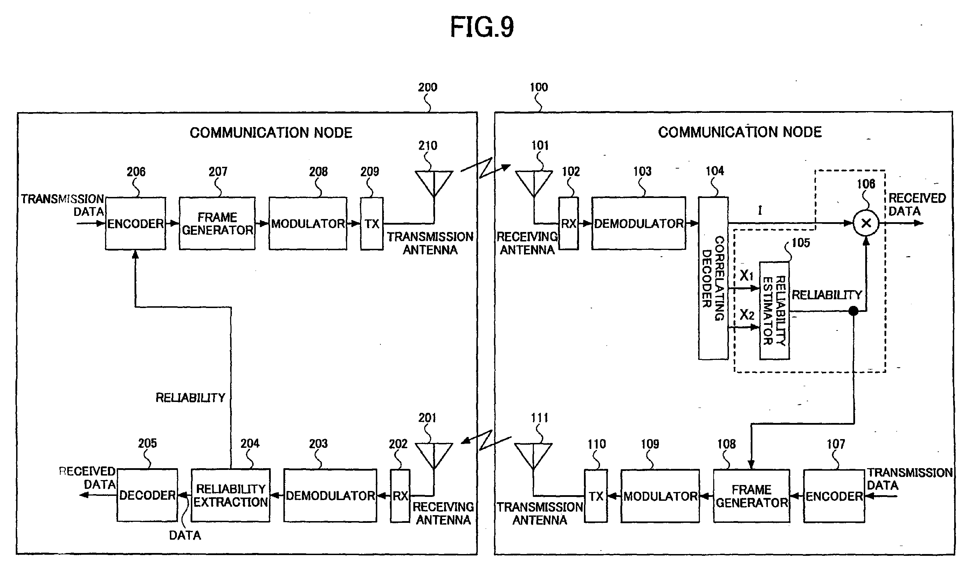

FIG. 9 is a block diagram illustrating an example of a digital (wireless) transmission system. This system is on the presumption that at least a portion of information (I) transmitted from a second node (communication apparatus) 200 to a first node (communication apparatus) 100 is encoded using a coding scheme decodable by correlating decoding.

The first communication apparatus 100 includes a receiver and a transmitter. The receiver includes a receiving antenna 101, an RX unit 102, a demodulator 103, a correlating decoder 104, a reliability estimator 105, and a multiplier 106. The transmitter includes an encoder 107, a frame generator 108, a modulator 109, a TX unit 110, and a transmission antenna 111. The receiver is similar to that of the first embodiment shown in FIG. 2; however, the despreader 13 and the synchronous detector 14 are replaced by the demodulator 103. Accordingly, the structure and the method of this example can be expanded to general demodulation schemes, other than CDMA. For simplification purposes, the fast Hadamard transform unit 15 and the maximum value detector 16 are collectively depicted as the correlating decoder 104. The other blocks are the same as those of the previous embodiments, and accordingly, explanation for them is omitted. The dashed block including the reliability estimator 105 and the multiplier 106 makes correction to the received information I according to the decoding reliability. This block may be replaced by the combination of the reliability estimator 17, the comparator 19 and the decoding result correcting unit 20 of the second embodiment shown in FIG. 4.

The data to be transmitted to the node 200 are encoded by the encoder 107. The frame generator 108 multiplexes/maps the coded data to radio frames. The decoding reliability estimated by the reliability estimator 105 is also mapped on the radio frames so as to be transmitted to the node 200.

Then, the data frames are modulated by the modulator 109 using a prescribed modulation scheme, subjected to frequency conversion to a radio frequency at the TX unit 110, and transmitted from the transmission antenna 111.

The counterpart node 200 in communication with the communication apparatus 100 also includes a receiver and a transmitter. The receiver includes a receiving antenna 201, an RX unit 202, a demodulator 203, a reliability extraction unit 204, and a decoder 205. The transmitter includes an encoder 206, a frame generator 207, a modulator 208, a TX unit 209, and a transmission antenna 210. The blocks other than the reliability extraction unit 204 of the receiver and the encoder 206 of the transmitter are the same as those already explained above, and therefore, explanation for them is omitted.

At the communication apparatus 200, the reliability extraction unit 204 separates and extracts the decoding reliability mapped on a prescribed field of the radio frame, and supplies the extracted reliability to the encoder 206 of the transmitter. The encoder 206 controls the coding rate for information I such that the coding reliability satisfies the required quality. If the decoding reliability is at or above the required quality, the decoding reliability is sufficient, and therefore, the coding rate is reduced by one stepsize in order to increase the amount of information to be transmitted, while slightly reducing the error correction ability. If the decoding reliability is less than the required quality, the decoding reliability is insufficient, and therefore, the coding rate is increased by one stepsize so as to improve the error correction ability in exchange for decreasing the amount of information to be transmitted.

With the digital transmission system of this example, efficient data transmission in accordance with the channel quality can be achieved, while maintaining the decoding reliability at a required quality.

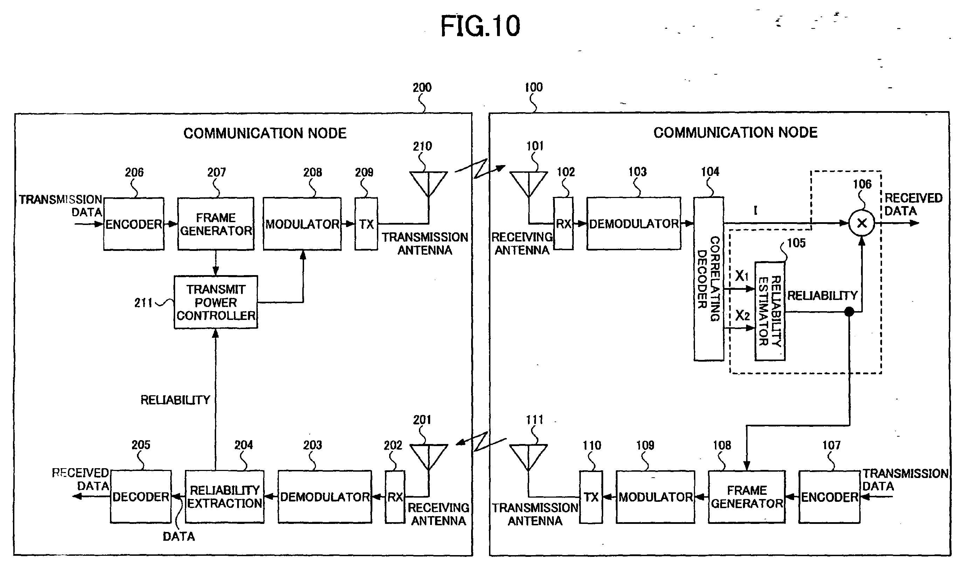

FIG. 10 is a block diagram of another example of a digital (wireless) transmission system. This system is different from the system of FIG. 9 in that a transmit power controller 211 is added behind the frame generator 207 in the counterpart node (communication apparatus) 200.

The transmit power controller 211 receives a data frame generated by the frame generator 207 at one input terminal, while receiving the decoding reliability extracted by the reliability extraction unit 204 at the other input terminal, and controls the transmit power level of information I mapped in the data frame such that the decoding reliability satisfies a required quality.

To be more precise, if the decoding reliability is at or above the required quality, the decoding reliability is sufficient, and therefore, the transmit power is reduced by one stepsize to reduce power consumption and interference level to the surroundings.

If the decoding reliability is lower than the required quality, the decoding reliability is insufficient, and therefore, the transmit power is raised by one stepsize to improve the decoding reliability.

With this digital transmission system, the transmit power is adjusted to a level required at least to maintain the decoding reliability so as to satisfy the required quality in accordance with the channel quality. Consequently, excessive power consumption and interference against the surroundings can be prevented.

The present invention has been described based on the specific embodiments; however, the invention is not limited to these embodiments. Many modifications and substitutions can be made by those with an ordinary skill in the art without departing from the scope of the invention, which is defined by the appended claims.

## Claims

1.  An error correction decoding method using a correlating decoding technique for decoding a channel quality indicator used in a W-CDMA system, comprising the steps of:

    estimating a decoding reliability K of a decoding result using one or more correlation values acquired in a correlating process; and
    correcting the decoding result according to the decoding reliability;

    **characterised in that** an estimated value for the decoding reliability K is found using the relationship:

    $$K = \frac{\Delta_{CQI}}{N}\left(x_1 - x_2\right)$$

    where $\Delta_{CQI}$ is the transmission amplitude ratio of the channel quality indicator to a dedicated physical control channel of said W-CDMA system, N is the average noise level, and $x_1$ and $x_2$ are the greatest and second greatest correlation values respectively.

2.  The method of claim 1, further comprising the step of:

    comparing the estimated reliability K with a threshold value.

3.  The method of claim 1 or 2, further comprising the step of:

    outputting a product of the decoding reliability and a correlating decoded value as a current decoding result.

4.  The method of claim 2, further comprising the step of:

    if the decoding reliability is less than the threshold value, determining that the decoding result is invalid, and outputting a previous valid decoding result as a current decoding result in place of the invalid decoding result.

5.  The method of claim 2, further comprising the step of:

    if the decoding reliability is less than the threshold value, determining that the decoding result is invalid, and outputting an average of past valid decoding results as a current decoding result in place of the invalid decoding result.

6.  The method of claim 2, further comprising the step of:

    if the decoding reliability is less than the threshold value, determining that the decoding result is invalid, and outputting an extrapolation of past valid decoding results.

7.  A communication apparatus that uses a correlating decoding technique to decode a channel quality indicator used in a W-CDMA system, comprising:

    a decoding reliability estimator configured to estimate a decoding reliability K of a decoding result using one or more correlation values acquired in a correlating process; and
a correcting unit configured to correct the decoding result according to the decoding reliability;

**characterised in that** the decoding reliability estimator is operable to find the estimated value for the decoding reliability K using the relationship:

$$K = \frac{\Delta_{CQI}}{N}(x_1 - x_2)$$

where $\Delta_{CQI}$ is the transmission amplitude ratio of the channel quality indicator to a dedicated physical control channel of said W-CDMA system, N is the average noise level, and $x_1$ and $x_2$ are the greatest and second greatest correlation values respectively.

8. The communication apparatus of claim 7, further comprising comparison means for comparing the estimated reliability K with a threshold value.

9. The communication apparatus of claim 7 or 8, further comprising:

transmitting means that transmits the decoding reliability to a communication node being in communication with the communication apparatus.

10. A communication apparatus comprising:

a receiving unit configured to receive a decoding reliability from a second communication apparatus, which is in communication with the communication apparatus when the apparatus is in use, the second communication apparatus being apparatus as claimed in claim 7, 8 or 9; and
a control unit configured to dynamically control a transmission parameter for an information item to be decoded such that the decoding reliability satisfies a required quality.

11. The communication apparatus of claim 10, wherein the transmission parameter is a parameter for determining a coding rate of data to be transmitted from the communication apparatus.

12. The communication apparatus of claim 10, wherein the transmission parameter is a parameter for determining a transmit power level of data to be transmitted from the communication apparatus.

13. A digital transmission system including a first communication apparatus and a second communication apparatus connected so as to communicate with each other,

wherein the first communication apparatus comprises apparatus as claimed in claim 9, the transmitting means being configured to transmit the decoding reliability to the second communication apparatus; and
wherein the second communication apparatus comprises apparatus as claimed in claim 10.

**Patentansprüche**

1. Fehlerkorrekturdecodierverfahren, unter Verwendung einer korrelierenden Decodiertechnik zum Decodieren eines Kanalqualitätsindikators, der in einem W-CDMA-System verwendet wird, mit den Schritten:

Schätzen einer Decodierzuverlässigkeit K eines Decodierresultates unter Verwendung von einem oder mehreren Korrelationswerten, die bei einem korrelierenden Prozess erfasst werden; und
Korrigieren des Decodierresultates gemäß der Decodierzuverlässigkeit;

**dadurch gekennzeichnet, dass** ein Schätzwert für die Decodierzuverlässigkeit K unter Verwendung der Beziehung gefunden wird:

$$K = \frac{\Delta_{CQI}}{N}(x_1 - x_2)$$

wobei $\Delta_{CQI}$ das Sendeamplitudenverhältnis des Kanalqualitätsindikators zu einem dedizierten physikalischen Steuerkanal des W-CDMA-Systems ist, N der durchschnittliche Rauschpegel ist und $x_1$ und $x_2$ die größten bzw. zweitgrößten Korrelationswerte sind.

2. Verfahren nach Anspruch 1, ferner mit dem Schritt:

Vergleichen der geschätzten Zuverlässigkeit K mit einem Schwellenwert.

3. Verfahren nach Anspruch 1 oder 2, ferner mit dem Schritt:

Ausgeben eines Produktes aus der Decodicrzuverlässigkeit und einem korrelierenden decodierten Wert als gegenwärtiges Decodierresultat.

4. Verfahren nach Anspruch 2, ferner mit dem Schritt:

Bestimmen, falls die Decodierzuverlässigkeit kleiner als der Schwellenwert ist, dass das Decodierresultat ungültig ist, und Ausgeben eines vorherigen gültigen Decodierresultates als gegenwärtiges Decodierresultat anstelle des ungültigen Decodierresultates.

5. Verfahren nach Anspruch 2, ferner mit dem Schritt:

Bestimmen, falls die Decodierzuverlässigkeit kleiner als der Schwellenwert ist, dass das Decodierresultat ungültig ist, und Ausgeben eines Durchschnittes von früheren gültigen Decodierresultaten als gegenwärtiges Decodierresultat anstelle des ungültigen Decodierresultates.

6. Verfahren nach Anspruch 2, ferner mit dem Schritt:

Bestimmen, falls die Decodierzuverlässigkeit kleiner als der Schwellenwert ist, dass das Decodierresultat ungültig ist, und Ausgeben einer Extrapolation von früheren gültigen Decodierresultaten.

7. Kommunikationsvorrichtung, die eine korrelierende Decodiertechnik verwendet, um einen Kanalqualitätsindikator, der in einem W-CDMA-System verwendet wird, zu decodieren, mit:

einem Decodierzuverlässigkeitsschätzer, der konfiguriert ist, um eine Decodierzuverlässigkeit K eines Decodierresultates unter Verwendung von einem oder mehreren Korrelationswerten zu schätzen, die bei einem korrelierenden Prozess erfasst werden; und
einer Korrektureinheit, die konfiguriert ist, um das Decodierresultat gemäß der Decodierzuverlässigkeit zu korrigieren;

**dadurch gekennzeichnet, dass** der Decodierzuverlässigkeitsschätzer betriebsfähig ist, um den Schätzwert für die Decodierzuverlässigkeit K unter Verwendung der Beziehung zu finden:

$$K = \frac{\Delta_{CQI}}{N}(x_1 - x_2)$$

wobei $\Delta_{CQI}$ das Sendeamplitudenverhältnis des Kanalqualitätsindikators zu einem dedizierten physikalischen Steuerkanal des W-CDMA-Systems ist, N der durchschnittliche Rauschpegel ist und $x_1$ und $x_2$ die größten bzw. zweitgrößten Korrelationswerte sind.

8. Kommunikationsvorrichtunq nach Anspruch 7, ferner mit einem Vergleichsmittel zum Vergleichen der geschätzten Zuverlässigkeit K mit einem Schwellenwert.

**9.** Kommunikationsvorrichtung nach Anspruch 7 oder 8, ferner mit:

einem Sendemittel, das die Decodierzuverlässigkeit an einen Kommunikationsknoten sendet, der mit der Kommunikationsvorrichtung kommuniziert.

**10.** Kommunikationsvorrichtung mit:

einer Empfangseinheit, die konfiguriert ist, um eine Decodierzuverlässigkeit von einer zweiten Kommunikationsvorrichtung zu empfangen, die mit der Kommunikationsvorrichtung kommuniziert, wenn die Vorrichtung in Gebrauch ist, welche zweite Kommunikationsvorrichtung eine Vorrichtung nach Anspruch 7, 8 oder 9 ist; und einer Steuereinheit, die konfiguriert ist, um einen Sendeparameter für ein Informationselement, das zu decodieren ist, dynamisch zu steuern, so dass die Decodierzuverlässigkeit einer geforderten Qualität entspricht.

**11.** Kommunikationsvorrichtung nach Anspruch 10, bei der der Sendeparameter ein Parameter zum Bestimmen einer Codierrate von Daten ist, die von der Kommunikationsvorrichtung zu senden sind.

**12.** Kommunikationsvorrichtung nach Anspruch 10, bei der der Sendeparameter ein Parameter zum Bestimmen eines Sendeleistungspegels von Daten ist, die von der Kommunikationsvorrichtung zu senden sind.

**13.** Digitales Sendesystem mit einer ersten Kommunikationsvorrichtung und einer zweiten Kommunikationsvorrichtung, die verbunden sind, um miteinander zu kommunizieren,

bei dem die erste Kommunikationsvorrichtung eine Vorrichtung nach Anspruch 9 umfasst, wobei das Sendemittel konfiguriert ist, um die Decodierzuverlässigkeit an die zweite Kommunikationsvorrichtung zu senden; und bei dem die zweite Kommunikationsvorrichtung eine Vorrichtung nach Anspruch 10 umfasst.

**Revendications**

**1.** Procédé de décodage d'une correction d'erreur utilisant une technique de décodage par corrélation destinée à décoder un indicateur de qualité de canal utilisé dans un système W-CDMA, comprenant les étapes consistant à :

estimer une fiabilité de décodage K d'un résultat de décodage utilisant une ou plusieurs valeurs de corrélation acquises dans un processus de corrélation ; et corriger le résultat de décodage selon la fiabilité de décodage ;

**caractérisé en ce qu'**une valeur estimée pour la fiabilité de décodage K est trouvée en utilisant la relation :

$$K = \frac{\Delta_{CQI}}{N}(x_1 - x_2)$$

où $\Delta_{CQI}$ est le rapport d'amplitude de transmission de l'indicateur de contrôle qualité à un canal de commande physique dédié dudit système W-CDMA, N est le niveau de bruit moyen, et x1 et x2 sont les valeurs de corrélation la plus élevée et la deuxième plus élevée, respectivement.

**2.** Procédé selon la revendication 1, comprenant en outre l'étape consistant à :

comparer la fiabilité estimée K avec une valeur de seuil.

**3.** Procédé selon la revendication 1 ou 2, comprenant en outre l'étape consistant à :

sortir un produit de la fiabilité de décodage et une valeur décodée de corrélation comme résultat de décodage actuel.

**4.** Procédé selon la revendication 2, comprenant en outre l'étape consistant à :

si la fiabilité de décodage est inférieure à la valeur de seuil, déterminer que le résultat de décodage est invalide, et sortir un résultat de décodage valide précédent comme résultat de décodage à la place du résultat de décodage invalide.

5. Procédé selon la revendication 2, comprenant en outre l'étape consistant à :

si la fiabilité de décodage est inférieure à la valeur de seuil, déterminer que le résultat de décodage est invalide, et sortir une moyenne des résultats valides passés comme résultat de décodage actuel à la place du résultat de décodage invalide.

6. Procédé selon la revendication 2, comprenant en outre l'étape consistant à :

si la fiabilité de décodage est inférieure à la valeur de seuil, déterminer que le résultat de décodage est invalide, et sortir une extrapolation des résultats de décodages valides passés.

7. Appareil de communication qui utilise une technique de décodage par corrélation pour décoder un indicateur de qualité de canal utilisé dans un système W-CDMA, comprenant :

un estimateur de fiabilité de décodage configuré pour estimer une fiabilité de décodage K d'un résultat de décodage en utilisant une ou plusieurs valeurs de corrélation acquises dans un processus de corrélation ; et une unité de corrélation configurée pour corriger le résultat de corrélation selon la fiabilité de décodage ;

**caractérisé en ce que** l'estimateur de fiabilité de décodage peut être utilisé pour trouver la valeur estimée pour la fiabilité de décodage K en utilisant la relation :

$$K = \frac{\Delta_{CQI}}{N}\left(x_1 - x_2\right)$$

où $\Delta_{CQI}$ est le rapport d'amplitude de transmission de l'indicateur de qualité de canal à un canal de commande physique dédié dudit système W-CDMA, N est le niveau de bruit moyen, et x1 et x2 sont les valeurs de corrélation la plus élevée et la deuxième plus élevée, respectivement.

8. Appareil de communication selon la revendication 7, comprenant en outre un moyen de comparaison destiné à comparer la fiabilité estimée K avec une valeur de seuil.

9. Appareil de communication selon la revendication 7 ou 8, comprenant en outre :

un moyen de transmission qui transmet la fiabilité de décodage à un noeud de communication en communication avec l'appareil de communication.

10. Appareil de communication comprenant :

une unité de réception configurée pour recevoir une fiabilité de décodage d'un second appareil de communication, qui est en communication avec l'appareil de communication lorsque l'appareil est utilisé, le second appareil de communication étant un appareil selon la revendication 7, 8 ou 9 ; et une unité de commande configurée pour commander de manière dynamique un paramètre de transmission pour un élément d'information à décoder de telle sorte que la fiabilité de décodage satisfasse une qualité requise.

11. Appareil de communication selon la revendication 10, dans lequel le paramètre de transmission est un paramètre destiné à déterminer un taux de codage de données à transmettre depuis l'appareil de communication.

12. Appareil de communication selon la revendication 10, dans lequel le paramètre de transmission est un paramètre destiné à déterminer un niveau de puissance de transmission de données à transmettre depuis l'appareil de communication.

13. Système de transmission numérique incluant un premier appareil de communication et un second appareil de communication connecté de manière à communiquer l'un avec l'autre,

dans lequel le premier appareil de communication comprend un appareil selon la revendication 9, le moyen de transmission étant configuré pour transmettre la fiabilité de décodage au second appareil de communication ; et dans lequel le second appareil de communication comprend un appareil selon la revendication 10.

# FIG.1

RECEIVING ANTENNA (1) → RX (2) → DESPREADING (3) → SYNCHRONOUS DETECTION (4) → FAST HADAMARD TRANSFORM (5) → MAXIMUM -VALUE DETECTION (6) → DECODED CQI VALUE

EP 1 675 294 B1

# FIG.2

RECEIVING ANTENNA — 11

RX — 12

DESPREADING — 13

SYNCHRONOUS DETECTION — 14

FAST HADAMARD TRANSFORM — 15

MAXIMUM -VALUE DETECTION — 16

DECODED CQI INTERIM VALUE

$X_1$
$X_2$

RELIABILITY ESTIMATOR — 17

DECODING RELIABILITY

× — 18

DECODED CQI VALUE

EP 1 675 294 B1

18

FIG.3

# FIG.4

RECEIVING ANTENNA — 11

RX — 12

DESPREADING — 13

SYNCHRONOUS DETECTION — 14

FAST HADAMARD TRANSFORM — 15

MAXIMUM –VALUE DETECTION — 16

DECODED CQI INTERIM VALUE

DECODING RESULT CORRECTION — 20

DECODED CQI VALUE

$X_1$

$X_2$

RELIABILITY ESTIMATOR — 17

DECODING RELIABILITY

OK/NG

COMPARATOR — 19

RELIABILITY DETERMINATION THRESHOLD

EP 1 675 294 B1

# FIG.5

CQI

INTERIM CQI VALUE (OK)
INTERIM CQI VALUE (NG)

DECODED CQI VALUE
(EFFECTIVE VALUE OF
PREVIOUS CQI)

TRANSMITTED
CQI LOCUS

INTERIM CQI VALUE
(NG)

$t_{now}$

t

EP 1 675 294 B1

# FIG.6

CQI

● INTERIM CQI VALUE (OK)
○ INTERIM CQI VALUE (NG)

TRANSMITTED
CQI LOCUS

DECODED CQI VALUE
(AVERAGE OF PAST
EFFECTIVE CQI VALUES)

INTERIM CQI VALUE (NG)

$t_{now}$

t

EP 1 675 294 B1

# FIG.7

CQI

- ● INTERIM CQI VALUE (OK)
- ○ INTERIM CQI VALUE (NG)

DECODED CQI VALUE
(EXTRAPOLATION OF
PAST FFECTIVE CQI VALUES)

TRANSMITTED
CQI LOCUS

INTERIM CQI VALUE (NG)

$t_{now}$

t

EP 1 675 294 B1

# FIG.8

```
                    ┌──────────┐
                    │  START   │
                    └──────────┘
                          │
                          ▼
                     ╱─────────╲          S1
                   ╱  DECODING   ╲
                  ╱ PROCESS EFFECTIVE ╲    NO
                  ╲       ?        ╱────────────────────────┐
                   ╲             ╱                          │
                     ╲─────────╱                            │
                        │ YES                               │
                        ▼                    S2             │
   ┌──────────────────────────────────────────────┐        │
   │            <OUTPUT INTERIM VALUE>             │        │
   │   DECODED CQI(tnow)=INTERIM CQI(tnow)         │        │
   └──────────────────────────────────────────────┘        │
                        │                                   │
                        ▼                    S3             ▼                         S4
   ┌──────────────────────────────────────────────┐   ┌────────────────────────────────┐
   │            <AVERAGING PROCESS>               │   │     <OUTPUT AVERAGE VALUE>      │
   │ AVERAGE CQI(tn)=(AVERAGE CQI(tn-1))*α         │   │ DECODED CQI(tnow)=AVERAGE CQI(tn)│
   │        +(INTERIM CQI(tnow))*(1-α)             │   │                                │
   └──────────────────────────────────────────────┘   └────────────────────────────────┘
                        │                                   │
                        ▼◄──────────────────────────────────┘
                    ┌──────────┐
                    │   END    │
                    └──────────┘
```

$$\text{DECODED CQI}(t_{now}) = \text{INTERIM CQI}(t_{now})$$

$$\text{AVERAGE CQI}(t_n) = (\text{AVERAGE CQI}(t_{n-1})) * \alpha + (\text{INTERIM CQI}(t_{now})) * (1-\alpha)$$

$$\text{DECODED CQI}(t_{now}) = \text{AVERAGE CQI}(t_n)$$

# FIG.9

EP 1 675 294 B1

# FIG.10

EP 1 675 294 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003115783 A

- EP 1478114 A